(19) Europäisches Patentamt
European Patent Office
Office européen des brevets

(11) **EP 2 574 962 A2**

(12) **EUROPEAN PATENT APPLICATION**

(43) Date of publication:
**03.04.2013 Bulletin 2013/14**

(51) Int Cl.:
***G01S 19/52*** *(2010.01)*

(21) Application number: **12185997.9**

(22) Date of filing: **26.09.2012**

| | |
|---|---|
| (84) Designated Contracting States: **AL AT BE BG CH CY CZ DE DK EE ES FI FR GB GR HR HU IE IS IT LI LT LU LV MC MK MT NL NO PL PT RO RS SE SI SK SM TR** Designated Extension States: **BA ME** | (72) Inventors: • **Tang, Mr. Deyu** **610041 Chengdu, Sichuan (CN)** • **He, Mr. Xiaoyong** **610041 Chengdu, Sichuan (CN)** • **Zou, Mr. Jinghua** **610041 Chengdu, Sichuan (CN)** • **Gou, Mr. Juan** **610041 Chengdu, Sichuan (CN)** |
| (30) Priority: **30.09.2011 CN 201110306929** **10.09.2012 US 201213609130** | |
| (71) Applicant: **Maishi Electronic (Shanghai) Ltd.** **Zhang Jiang Hi-Tech Park** **Shanghai** **201203 (CN)** | (74) Representative: **Lippert, Stachow & Partner** **Patentanwälte** **Postfach 30 02 08** **51412 Bergisch Gladbach (DE)** |

(54) **A moving information determination apparatus, a receiver, and a method thereby**

(57) A moving information determination apparatus includes an ECA (Earth Center Assistant) information acquisition module, an altitude information and position information storage module and a moving information calculation module. The altitude information and position information storage module provides initial position information of the moving information determination apparatus and altitude information of the moving information determination apparatus. The ECA acquisition module obtains a radius of the Earth at the current position of the moving information determination apparatus. The moving information calculation module calculates the current position and/or velocity of the moving information determination apparatus based on the radius of the Earth and a plurality of signals from a plurality of satellites.

FIG. 4

EP 2 574 962 A2

**Description**

BACKGROUND

This Application claims priority to Patent Application Number 201110306929.3, filed on September 30, 2011 with State Intellectual Property Office of the P.R. China (SIPO), which is hereby incorporated by reference.

A conventional positioning system, such as the Global Positioning System (GPS), requires knowing transmission distances from at least four satellites to calculate the position of a GPS receiver and calculation is done by using the Least Mean Squares (LMS) algorithm. However, if the number of the satellites available for measuring transmission distances is not enough, it is impossible to use the conventional GPS positioning method to obtain the position information of the receiver. Moreover, interference to the GPS signals (for example, multipath reflection) or poor satellites geometric distributions may sharply decrease the accuracy of the positioning result obtained by the conventional GPS positioning method. In a situation when the number of the available satellites is less than four, for example, only three transmission distances from the three satellites are available, traditionally, a constant altitude value is input from an external source, and the positioning result is calculated for two-dimensional space. However, as the altitude value cannot be updated timely, the positioning result has a relatively large error.

SUMMARY

The present invention discloses a moving information determination apparatus. The moving information determination apparatus includes an ECA (Earth Center Assistant) information acquisition module, an altitude information and position information storage module and a moving information calculation module. The ECA acquisition module obtains a radius of the Earth at the current position of the moving information determination apparatus. The altitude information and position information storage module is configured to provide position information (for example, initial position information) and altitude information of the moving information determination apparatus. The moving information calculation module calculates the current position and/or velocity of the moving information determination apparatus based on the radius of the Earth and a plurality of signals from a plurality of satellites.

In another embodiment, the present invention discloses a GPS receiver in a Global Navigation Positioning System. The GPS receiver comprises a moving information determination apparatus and a basement signal processing unit. The moving information determination apparatus further comprises an Earth Center Assistant (ECA) acquisition module that obtains a radius of the Earth at the current position of the moving information determination apparatus, an altitude information and position information storage module that provides position information of the moving information determination apparatus and altitude information of the moving information determination apparatus and a moving information calculation module that calculates the current position and/or velocity of the moving information determination apparatus based on the radius of the Earth and a plurality of signals from a plurality of satellite. The baseband signal processing unit provides the signals from the satellites to the moving information determination apparatus.

In yet another embodiment, the present invention discloses a method for determining moving information of an object equipped with a GPS receiver. The method includes the steps of obtaining, at an altitude information and position information storage module, initial position information and altitude information of the GPS receiver, obtaining, at an Earth center assistant information acquisition module, a radius of the Earth at a current position of the GPS receiver based on the initial position information and altitude information of the GPS receiver, and calculating, at a moving information calculation module, the moving information based on the radius of the Earth and a plurality of signals from a plurality of satellites, wherein the moving information comprises at least one of the current position and velocity of the receiver.

BRIEF DESCRIPTION OF THE DRAWINGS

The invention will be readily understood in view of the following description when accompanied by the below figures and wherein like reference numerals represent like elements, wherein:

FIG. 1A is a block diagram illustrating an example of a moving information determination apparatus, in accordance with one embodiment of the present disclosure;

FIG. 1B shows a detailed block diagram of a moving information determination apparatus in FIG. 1A;

FIG. 2 is a flowchart illustrating a method for establishing initial position by an initial position establishment and management module, in accordance with one embodiment of the present disclosure;

FIG. 3A is an illustration of a conventional GPS system;

FIG. 3B is an example of observe vectors from a moving information determination apparatus to a satellite, in accordance with one embodiment of the present disclosure;

FIG. 3C is an example of a topology utilizing an Earth center assistant (ECA) positioning strategy provided by the present invention, in accordance with one embodiment of the present disclosure;

FIG. 4 is a block diagram of a GPS receiver integrated into a moving information determination apparatus in accordance with one embodiment of the present disclosure;

FIG. 5 is a flowchart illustrating a positioning method in accordance with one embodiment of the present disclosure;

FIG. 6 are four charts illustrating positioning errors and dilution of precision (DOP) values obtained from a GPS receiver disclosed in the present invention and a conventional receiver when the DOP value is relatively large.

FIG. 7 are two charts illustrating velocity deviations obtained from a GPS receiver disclosed in the present invention and a conventional receiver when the DOP value is relatively large.

FIG. 8 are four charts illustrating positioning errors and DOP values obtained from a GPS receiver disclosed in the present invention and a conventional receiver when the DOP value is extremely large.

FIG. 9 is a chart illustrating velocity deviations obtained from a GPS receiver disclosed in the present invention when the DOP value is extremely large.

FIG. 10 is a comparison diagram illustrating a positioning result calculated by a GPS receiver disclosed in the present disclosure and a conventional receiver.

DETAILED DESCRIPTION

Reference will now be made in detail to the embodiments of the present disclosure, examples of which are illustrated in the accompanying drawings. While the present disclosure will be described in conjunction with the embodiments, it will be understood that they are not intended to limit the present disclosure to these embodiments. On the contrary, the present disclosure is intended to cover alternatives, modifications, and equivalents, which may be included within the spirit and scope of the present disclosure as defined by the appended claims.

Furthermore, in the following detailed description of embodiments of the present disclosure, numerous specific details are set forth in order to provide a thorough understanding of the present disclosure. However, it will be recognized by one of ordinary skill in the art that the present disclosure may be practiced without these specific details. In other instances, well-known methods, procedures, components, and circuits have not been described in detail as not to unnecessarily obscure aspects of the embodiments of the present disclosure.

Embodiments in accordance with the present disclosure provide a moving information determination apparatus. The moving information determination apparatus includes an ECA (Earth center assistant) information acquisition module, an altitude information and position information storage module and a moving information calculation module. The ECA information acquisition module obtains a radius of the Earth at the current position of the moving information determination apparatus. The altitude information and position information storage module is configured to provide position information (for example, initial position information) and altitude information of the moving information determination apparatus. The moving information calculation module calculates the current position and/or velocity of the moving information determination apparatus based on the radius of the Earth and a plurality of signals from a plurality of satellites. The details of the moving information determination apparatus will be described in the accompanying drawings.

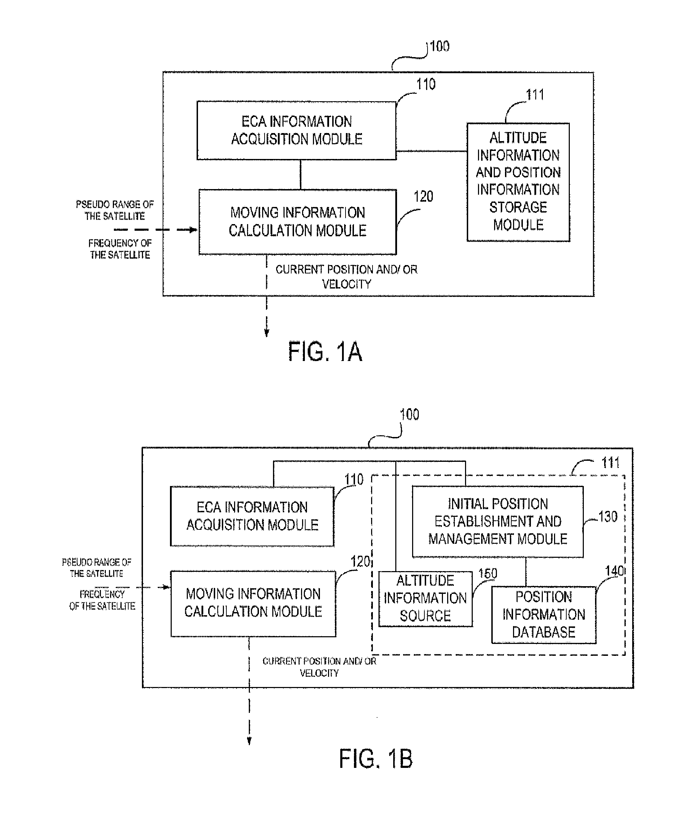

FIG.1A illustrates a moving information determination apparatus 100 in accordance with one embodiment of the present disclosure. As shown in FIG.1a, the moving information determination apparatus 100 includes an Earth center assistant (ECA) information acquisition module 110, an altitude information and position information storage module 111, and a moving information calculation module 120. The ECA information acquisition module 110 is configured to obtain a radius of the Earth at the position of the moving information determination apparatus100. The altitude information and position information storage module 111 is configured to provide position information (for example, initial position information) of the moving information determination apparatus 100 and altitude information of the moving information determination apparatus 100. The moving information calculation module 120 is configured to calculate the current position and/or velocity of the moving information determination apparatus 100 based on the radius of the Earth described above and information from at least three satellites. The information from these satellites includes pseudo ranges between the moving information determination apparatus100 and each of the satellites and/or the frequencies of GPS signals from these satellites.

The ECA information acquisition module 110 is configured to obtain an average radius of the Earth. The average radius of the Earth may be obtained from the external environment by a known method, or directly stored in the ECA information acquisition module 110. The average radius of the Earth is well known, and the method for obtaining the average radius of the Earth will be apparent to those skilled in the art and not be repetitively described herein for brevity and clarity. The ECA information acquisition module 110 may calculate the radius of the Earth at the position of the moving information determination apparatus 100 based on an initial position of the moving information determination apparatus 100 and corresponding altitude information.

FIG. 1B shows a detailed block diagram of a moving information determination apparatus 100 in FIG. 1A.

Elements having similar functions as in FIG. 1A are labeled the same and will not be repetitively described herein for purposes of brevity and clarity. The altitude information and position information storage module 111 further includes an initial position establishment and management module 130, a position information database 140 and an altitude information source 150.

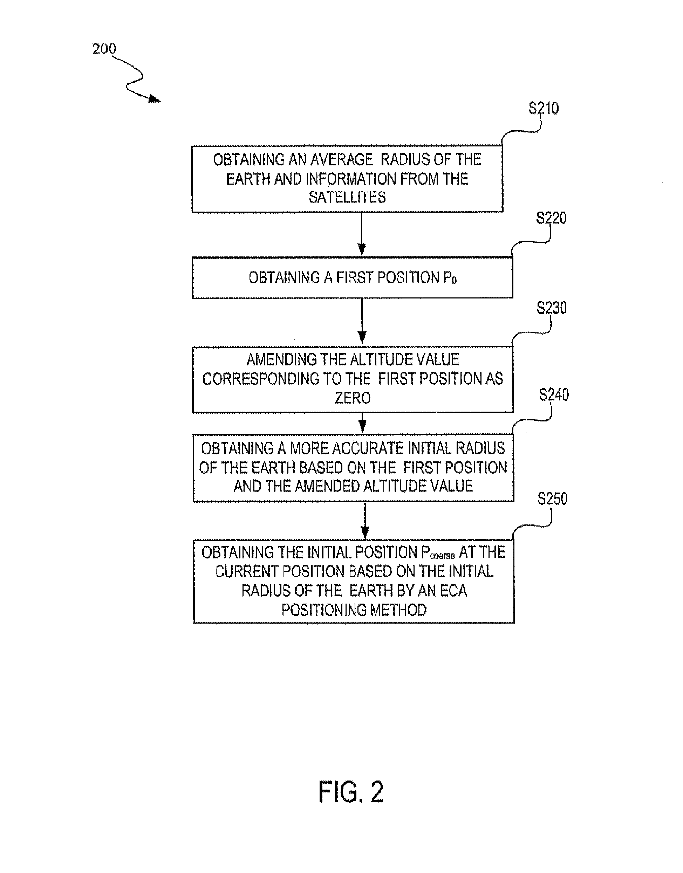

The initial position establishment and management module 130 is configured to establish the initial position. The initial position establishment and management module 130 establishes the initial position by a method described in FIG.2, which will be described in detail hereinafter. The position information database 140 is configured to store a first position Po, an initial position $P_{coarse}$, and the most accurate position as finally calculated by the initial position establishment and management module 130. The altitude information source 150 stores corresponding altitude information at the position of the moving information determination apparatus 100.

As show in the example of FIG. 2, in block S210, the initial position establishment and management module 130 obtains an average radius of the Earth and information from multiple satellites. Then, in block S220, the initial position establishment and management module 130 determines a first position $P_0$ of the moving information determination apparatus 100 based on the average radius of the Earth and the information from multiple satellites. The details for calculating the first position $P_0$ based on the average radius of the Earth and information from the satellites will be described hereinafter. The error of the first position $P_0$ may be relatively large, for example, more than 100 Km. In block S230, the initial position establishment and management module 130 amends the altitude value corresponding to the first position $P_0$ according to the landscape or altitude information obtained from an altitude information source.

In block S240, the initial position establishment and management module 130 calculates a more accurate initial radius of the Earth according to the first position $P_0$ and the amended altitude value. In block S250, an ECA positioning method is used for obtaining an initial position $P_{coarse}$ of the moving information determination apparatus 100 based on the more accurate initial radius of the Earth obtained in block S240. The error of the initial position $P_{coarse}$ is around 20Km.

Although not show in FIG. 2, one skilled in the art should understand that a much more accurate initial position can be calculated by iterating steps shown in blocks S240 and S250 multiple times. In order to obtain the most accurate position, the new positions calculated by multiple iterations can be compared with each other, and the most accurate position is selected from these positions according to a predetermined rule. The detailed iteration method can be implemented by repeatedly performing operations in blocks S240 and S250. For example, the initial position $P_{coarse}$ can be the position calculated by the last iteration. In another embodiment, the initial position $P_{coarse}$ can be obtained by comparing a new position calculated by each of the multiple iterations with a predetermined threshold and selecting the most accurate position according to a specified rule. Details for obtaining the initial position may be omitted herein.

It should be understood that FIG. 2 illustrates an example of a method for obtaining the initial position and other suitable methods can be employed. For example, the initial position $P_{coarse}$ can be obtained by employing a conventional positioning method, or by using the position information previously stored in the moving information determination apparatus 100 and so on. The present invention is not limited to the given examples.

In one embodiment, the position information database 140 is configured to store the first position $P_0$, the initial position $P_{coarse}$, and the accurate position as finally calculated. In another embodiment, the moving information determination apparatus 100 further includes a position information updating module (not shown) which is configured to replace the previous position with a new calculated position. For example, the first position $P_0$ is replaced by the initial position $P_{coarse}$, and the initial position $P_{coarse}$ is replaced by the accurate position as finally calculated.

As described above, the altitude information source 150 in accordance with one embodiment of the present disclosure. In one embodiment, the altitude information source 150 includes four kinds of altitude information sources which are used according to the priority order. More specifically, the altitude information source 150 includes a first altitude information source storing altitude information which is calculated (not based on ECA) by a GPS receiver (the moving information determination apparatus 100 is integrated in the GPS receiver), a second altitude information source storing previous altitude information recorded on the GPS receiver, a third altitude information source storing altitude information obtained from an external altitude measurement source (for example, an altimeter, a barometer, or a three-dimensional map, etc.), and a fourth altitude information source storing global altitude information. The fourth altitude information source is a global attitude information database which stores global altitude information and is integrated in the moving information determination apparatus 100. In one embodiment, the first altitude information source has the first highest use priority, the second altitude information source has the second highest use priority, and the third altitude information source has the third highest use priority, while the fourth altitude information source has the fourth highest use priority.

The ECA information acquisition module 110 can select an altitude value from one of the four kinds of altitude information sources to calculate the radius of the Earth. In another embodiment, the moving information determination apparatus 100 further includes an altitude information source selection module (not shown). The altitude information source selection module is configured to select an altitude value from the above-mentioned four kinds of altitude information sources in the following ways, which will be described in detail hereinafter.

The situation in which the altitude information is calculated (not based on ECA) by the GPS receiver will be described in detail below. The altitude information obtained by the GPS receiver is influenced by the signal environment, i.e. the environment where the GPS receiver receives GPS signals, whether the GPS receiver is sheltered or not, and whether the obtained altitude information has relatively large jitter. After calculating the moving average for the obtained altitude information, the altitude value is close to the actual altitude value. According to one embodiment of the present disclosure, in the situation that the GPS receiver calculates the altitude information, a 500 seconds time period is selected, and during this 500 seconds time period, the moving average is used in the calculation of the altitude value which is done by the moving information determination apparatus 100 (integrated in the GPS receiver). Therefore, a much more stable altitude value A can be obtained, which is used for ECA calculation. It should be understood that the time period for calculating the moving average is not limited to 500 seconds. One skilled in the art should understand that the time period for the moving average can be set as other values, and is not limited to the given examples.

In one embodiment of the present disclosure, the moving average can be used for the altitude value calculated by the GPS receiver during a time period of 50s, thus, a real-time and relatively stable altitude datum $A_{ref}$ is obtained. The altitude datum $A_{ref}$ is used for checking the four kinds of altitude information sources, and determining if an altitude value from a corresponding altitude information source is suitable for use. Similarly, in order to obtain the real-time and relatively stable altitude datum, the time period for calculating the moving average is not limited to 50 seconds. One skilled in the art should understand that a different altitude datum may be used according to the stability of the altitude value.

The details as whether to choose the altitude value A stored in the first altitude information source will be described hereinafter. If the difference between the altitude value A and the altitude datum $A_{ref}$ is greater than 100m, the altitude value A is regarded as an altitude value with a relatively large error and is not suitable for use. If the difference between the altitude value which is calculated by the ECA positioning method based on the altitude value A and the altitude value A is greater than 50m, it is inferred that the altitude value A has a relatively large error and is not suitable for use

If the altitude value A stored in the first altitude information source is not suitable for use, the current position of the moving information determination apparatus 100, which is calculated based on the altitude value A, is abandoned. Accordingly, the ECA information acquisition module 110 recalculates the current position based on the altitude information from other kinds of altitude information sources. In one embodiment, the ECA information acquisition module 110 recalculates the current position based on the altitude information from the second altitude information source, the third altitude information source, or the fourth altitude information source.

The previous altitude information that is recorded on the GPS receiver will be described. If the GPS receiver has been positioned before the GPS receiver booting up, the previous positioning information (for example, the previous position $P_{historical}$ of the GPS receiver, the previous altitude value A calculated by the GPS receiver, and the previous positioning time, etc.) is stored in a flash memory on the GPS receiver. The previous altitude value A, which is calculated by the GPS receiver and stored in the second altitude information source, can be used herein.

The details as whether to choose the previous altitude value A from the second altitude information source will be described. If the difference between the previous altitude value A and the altitude datum $A_{ref}$ is greater than 100m, the previous altitude value A is regarded as an altitude value with a relatively large error, and is not suitable for use. If the difference between an current position which is calculated by the ECA positioning method and the backup previous position $P_{historical}$ of GPS receiver is greater than a city scope (40km) on the surface of the Earth, the previous altitude value A is regarded as an altitude value with a relatively large error, and is not suitable for use. And /or if the difference between an altitude value which is calculated by the ECA positioning method based on the previous altitude value A and the previous altitude value A is greater than 50m, then the previous altitude value A is regarded as an altitude value with a relatively large error and is not suitable for use.

If the previous altitude value A from the second altitude information source is not suitable for use, the current position of the moving information determination apparatus 100, which is calculated based on the previous altitude value A, is abandoned. Accordingly, the ECA information acquisition module 110 recalculates the current position based on the altitude information from other kinds of altitude information sources. In one embodiment, the ECA information acquisition module 110 recalculates the current position based on the altitude information from the third altitude information source or the fourth altitude information source.

The altitude information which is obtained from an external altitude measurement source, such as, an altimeter, a barometer or a three-dimensional map and so on, will be described. In one embodiment, the GPS receiver is coupled to at least one external altitude measurement source (for example, an altimeter, a barometer or a three-dimensional map, etc.) and obtains a current altitude value A in real time from the external altitude measurement source.

The details as whether to choose the altitude value A from the third altitude information source will be described. If the difference between the altitude value A and the altitude datum $A_{ref}$ is greater than 100m, then the altitude value A is regarded as an altitude value with a relatively large error and is not suitable for use. If the difference between an altitude value which is calculated by the ECA positioning method based on the altitude value A from the third altitude information source and the altitude value A is greater than 50m, then the altitude value A is regarded as an altitude value with a relatively large error and is not suitable for use.

If the altitude value A from the third altitude information source is not suitable for use, the current position of the moving information determination apparatus 100 which is calculated based on the altitude value A is abandoned. Accordingly, the ECA information acquisition module 110 recalculates the current position based on the altitude information stored in other kinds of altitude information sources. In one embodiment, the ECA information acquisition module 110 recalculates the current position based on the altitude information from the fourth altitude information source.

The altitude information from the fourth altitude information source will be described below. The global altitude information is stored in the fourth altitude information source (global altitude information database) of GPS receiver. The global altitude information database includes two kinds of information, such as a specific position on the surface of the Earth and a corresponding altitude value. As the information is informative, the sample interval when establishing the database is relatively long, and the error is relatively large, accordingly. It is assumed that altitude value changes in the scope of a city are relatively small in the present disclosure.

The initial position $P_{coarse}$ of the GPS receiver is used to search a position $P_i$ that is nearest to the initial position $P_{coarse}$ on the surface of the Earth and a corresponding altitude value A from the global altitude information database.

The details as whether to choose the altitude value A from the global altitude information database will be described. If the range difference between the initial position $P_{coarse}$ of the GPS receiver and the searched position $P_i$ from the global altitude information database is greater than a maximum city scope (60km) on the surface, no suitable altitude information can be found in the global altitude information database.

If the difference between the altitude value A stored in the global altitude information database and the altitude datum $A_{ref}$ is greater than 100m, the altitude value A is regarded as an altitude value with a relatively large error, and is not suitable for use. If the range difference between a current position calculated by the ECA positioning method and the searched position $P_i$ is greater than a city scope (40km), the altitude value A is regarded as an altitude value with a relatively large error, and is not suitable for use. If the difference between an altitude value which is calculated by the ECA positioning method based on the altitude value A from the global altitude information database and the altitude value A is greater than 50m, the altitude value A is regarded as an altitude value with a relatively large error and is not suitable for use.

If the altitude value A from the global altitude information database is not suitable for use, then the current position of the moving information determination apparatus 100 which is calculated based on the altitude value A is abandoned.

As shown in the example of FIG. 1B, the ECA information acquisition module 110 obtains the initial position of the moving information determination apparatus 100 from the initial position establishment and management module 130 and a corresponding altitude value from an altitude information source 150, and calculates the radius of the Earth at the position of the moving information determination apparatus 100 based on the obtained initial position information and the corresponding altitude value. The moving information calculation module 120 determines the current position and/or velocity of the moving information determination apparatus 100 based on the radius of the Earth and information from the satellites.

An example of the ECA information acquisition module 110 calculating the radius of the Earth based on the initial position information of the moving information determination apparatus 100 and the corresponding altitude value will be described below.

The ECA information acquisition module 110 obtains an initial position $P_{coarse}$ of the moving information determination apparatus 100 from the initial position establishment and management module 130. The ECA information acquisition module 110 further obtains a corresponding altitude value from the altitude information source 150. The corresponding radius of the Earth $\rho_E$ is calculated according to equations (1-1), (1-2) and (1-3) as shown below.

In a World Geodetic System (WGS) coordinate system, the altitude value of the moving information determination apparatus 100 corresponding to the initial position $P_{coarse}$ is set as following:

$$P_{coarse\_WGS} \left( \text{Altitude} \right) = A \qquad \qquad (1\text{-}1)$$

$P_{coarse\_WGS}$ represents the initial position of the moving information determination apparatus 100 in the WGS coordinate system; A represents an altitude value from the altitude information source 150. The WGS coordinate system is a three-dimensional coordinate system that includes longitude, latitude and altitude. According to the equation (1-1), the altitude value of the three-dimensional coordinate system is replaced by the altitude value obtained from the altitude information source 150.

The WGS coordinate system is converted to an Earth-centered Earth-fixed (ECEF) coordinate system. In the ECEF coordinate system, the initial position $P_{coarse}$ of the moving information determination apparatus 100 is amended as following:

$$P_{coarse\_ECEF} = WGSToECEF(P_{coarse\_WGS}) \qquad (1\text{-}2)$$

WGSToECEF () represents a standard conversion formula that converts a WGS coordinate system to an ECEF coordinate system in the GPS system. Therefore, the radius of the Earth is calculated according to the equation (1-3), and the calculated radius of the Earth is used for the ECA calculation.

$$\rho_E = \sqrt{P_{coarse\_ECEF}(x)^2 + P_{coarse\_ECEF}(y)^2 + P_{coarse\_ECEF}(z)^2} \qquad (1\text{-}3)$$

The above description illustrates an embodiment the configuration of the moving information determination apparatus 100 in accordance with present disclosure. An example illustrating how the moving information determination apparatus 100 performs positioning based on the radius of the Earth obtained from the ECA information acquisition module 110 will be described below.

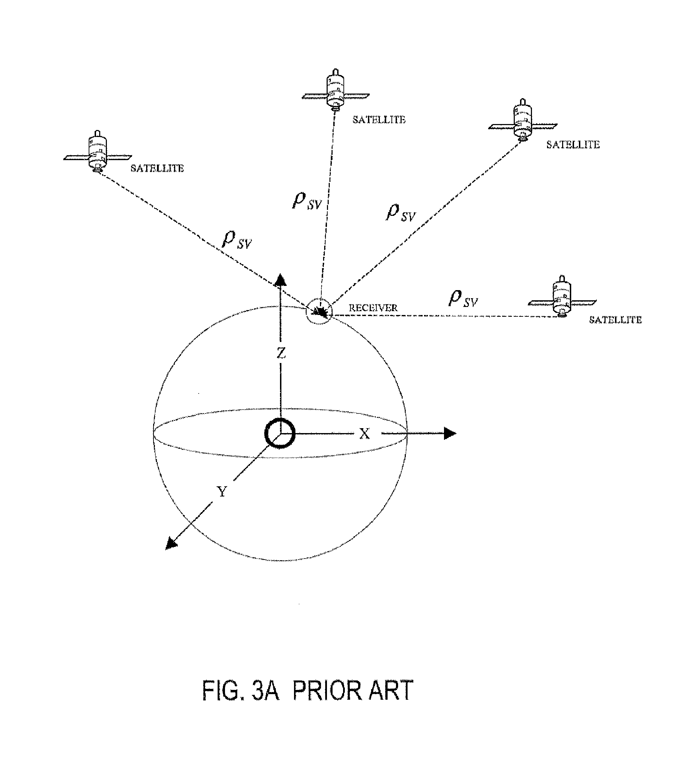

A method for positioning by a conventional receiver is provided. FIG. 3A is a space module of a conventional GPS system. $\rho_{sv}$ represents a distance R from a satellite to the receiver. The coordinate position of the GPS receiver U in the ECEF coordinate system is set as $(x_u, y_u, z_u)$ and the coordinate position of the satellite $S_j$ is $(x_j, y_j, z_j)$. Then the corrected pseudo range is calculated according to the equation (1-4):

$$\rho_j = \|S_j\text{-}U\| + c\, t_u \qquad (1\text{-}4)$$

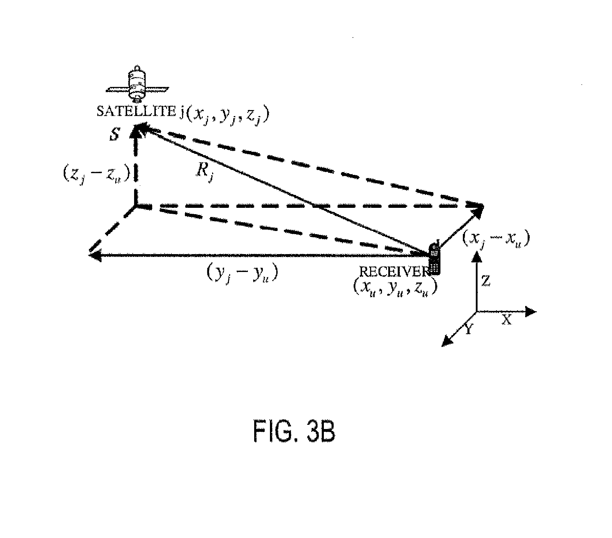

wherein, j = 1, 2, ...., N, and j is a temporary number of a measured value by an effective satellite at present, not SVN (Satellite Vehicle Number) number or PRN (Pseudo-Random Noise) number of the satellites. $\|S_j\text{-}U\|$ represents the geometric distance between the GPS receiver and the satellite j, c represents the velocity of light, $t_u$ represents the clock bias of the receiver. $\rho_j$ represents the pseudo range after an error correction (EC), and is measured by the receiver. As show in FIG. 3B, the distance $R_j$ from the GPS receiver to the satellite j is calculated according to equation (1-5):

$$R_j = \|S_j\text{-}U\| = \sqrt{(x_j - x_u)^2 + (y_j - y_u)^2 + (z_j - z_u)^2} \qquad (1\text{-}5)$$

According to the equations (1-4) and (1-5), the non-linear equations (1-6) as following are used to calculate the coordinate position $(x_u, y_u, z_u)$ and the clock bias of the receiver.

$$\begin{cases} \rho_1 = \sqrt{(x_1 - x_u)^2 + (y_1 - y_u)^2 + (z_1 - z_u)^2} + ct_u \\ \rho_2 = \sqrt{(x_2 - x_u)^2 + (y_2 - y_u)^2 + (z_2 - z_u)^2} + ct_u \\ \cdots\cdots \\ \rho_N = \sqrt{(x_N - x_u)^2 + (y_N - y_u)^2 + (z_N - z_u)^2} + ct_u \end{cases} \qquad (1\text{-}6)$$

The non-linear equations (1-6) can be solved by the Least Mean Squares (LMS) algorithm, Kalman method, etc. The details for solving the non-linear equations will not be repetitively described herein for brevity and clarity.

A method for calculating the current position of the moving information determination apparatus 100 will be described, in accordance with one embodiment of the present disclosure. Besides the information from the satellite as mentioned above, the moving information determination apparatus 100 also uses the radius of the Earth as ECA information for calculating the current position.

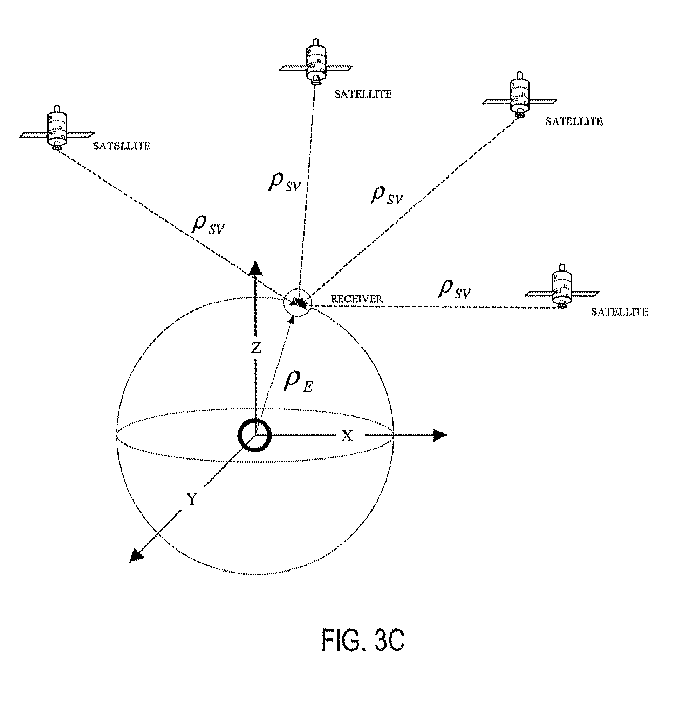

FIG. 3C illustrates an example of a topology utilizing an Earth center assistant (ECA) positioning strategy provided by the present invention, in accordance with one embodiment of the present disclosure. Comparing with FIG. 3a, a dotted line from the center of Earth to the GPS receiver is added. The dotted line represents a radius of the Earth $\rho_E$ at the position of the moving information determination apparatus 100. And the radius of the Earth $\rho_E$ is used as the ECA information in this embodiment.

ECA position method is implemented by adding an ECA positioning equation on the N-th order non-linear equations (1-6) (N is an integer and equal to or greater than 3). In other words, the center of the Earth is regarded as another satellite for the purpose of calculation, i.e., a satellite at the center of the Earth.

The coordinate position of the satellite at center of the Earth is set as (0, 0, 0), the clock bias of the GPS receiver is $t_u$, and $t_u$ is set to 0, $\rho_E$ represents a ball radius from the center of the Earth to the receiver, and $\sqrt{x_u^2 + y_u^2 + z_u^2} = \rho_E$ is obtained by using the altitude information source 150 and the initial position establishment and management module 130. Thus, the non-linear equations (1-7) for the ECA positioning method are listed below:

$$\begin{cases} \rho_1 = \sqrt{(x_1 - x_u)^2 + (y_1 - y_u)^2 + (z_1 - z_u)^2} + ct_u \\ \rho_2 = \sqrt{(x_2 - x_u)^2 + (y_2 - y_u)^2 + (z_2 - z_u)^2} + ct_u \\ \dots\dots \\ \rho_N = \sqrt{(x_N - x_u)^2 + (y_N - y_u)^2 + (z_N - z_u)^2} + ct_u \\ \rho_E = \sqrt{(0 - x_u)^2 + (0 - y_u)^2 + (0 - z_u)^2} \end{cases} \quad (1\text{-}7)$$

The non-linear equations (1-7) can be solved by the Least Mean Squares (LMS) algorithm, Kalman method, ect. Thus the current coordinate position ($x_u$, $y_u$, $z_u$) of the moving information determination apparatus 100 is calculated accordingly.

The ECA information is used for positioning by the moving information determination apparatus 100, in accordance with one embodiment of the present disclosure. Accordingly, in a situation that the number of the satellites is not enough or the signals from the satellites have relatively strong interference, the accuracy of position is improved.

Moreover, the moving information determination apparatus 100 further calculates the current velocity of the moving information determination apparatus 100 based on the radius of the Earth and the information from the satellite. Similarly, the ECA information acquisition module 110 calculates the radius of the Earth based on an initial position of the moving information determination apparatus 100 and a corresponding altitude value. As described above, the initial position establishment and management module 130 establishes the initial position $P_{coarse}$ based on an average radius of the Earth, calculates a more accurate radius of the Earth at the position of the moving information determination apparatus 100 based on the initial position $P_{coarse}$, and then calculates the current velocity of the moving information determination apparatus 100 according to the calculated radius of the Earth. Alternatively, the current velocity can be calculated by directly using the average radius of the Earth. The method for calculating the current velocity according to the radius of the Earth will be described below.

A method for calculating the current velocity by a conventional GPS receiver is provided. Traditionally, the velocity is estimated based on the Doppler frequency received by the GPS receiver. The Doppler shift on a signal received by the GPS receiver is due to a relative movement between the satellites and the receiver. The frequency $f_R$ of the signal received by the GPS receiver can be calculated according to equation (1-8) as following:

$$f_R = f_T \left(1 - \frac{(V - \dot{u})A}{c}\right) \quad (1\text{-}8)$$

where, $f_T$ represents a frequency of a carrier signal transmitted by a satellite, V represents a velocity vector of the satellite, u represents a velocity vector of the receiver, A represents a unit vector with the direction from the GPS receiver to the satellite, and c represents the velocity of light.

For the jth satellite, the equation (1-8) can be described as equation (1-9):

$$f_{Rj} = f_{Tj}\left\{1 - \frac{1}{c}\left[(V_j - \dot{u}) \bullet A_j\right]\right\} \qquad (1\text{-}9)$$

where, $V_j = (v_{xj}, v_{yj}, v_{zj})$, $A_j = (a_{xj}, a_{yj}, a_{zj})$, $\dot{u} = (\dot{x}_u, \dot{y}_u, \dot{z}_u)$

$$a_{xj} = \frac{x_j - x_u}{R_j}, \quad a_{yj} = \frac{y_j - y_u}{R_j}, \quad a_{zj} = \frac{z_j - z_u}{R_j}$$

For the jth satellite, the measurement estimation for the frequency of the received signal is $f_j$. The measurement estimation has errors, and also has a frequency bias with $f_{Rj}$, The frequency bias is correlated with the time shift $t_u$ of the clock in the GPS receiver with the GPS system time. The unit of the time shift $t_u$ is second/second. The relationship of $f_j$ with $f_{Rj}$ is shown in equation (1-10).

$$f_{Rj} = f_j(1 + \dot{t}_u) \qquad (1\text{-}10)$$

Combining the equations (1-9) and (1-10), and after an algebraic process, an equation (1-11) is obtained as following:

$$\frac{c(f_j - f_{Tj})}{f_{Tj}} + V_j \bullet A_j = \dot{u} \bullet A_j - \frac{c f_j \dot{t}_u}{f_{Tj}} \qquad (1\text{-}11)$$

By a vector component expansion on the dot product vector, an equation (1-12) is obtained as following:

$$\frac{c(f_j - f_{Tj})}{f_{Tj}} + v_{xj}a_{xj} + v_{yj}a_{yj} + v_{zj}a_{zj} = \dot{x}_u a_{xj} + \dot{y}_u a_{yj} + \dot{z}_u a_{zj} - \frac{c f_j \dot{t}_u}{f_{Tj}} \qquad (1\text{-}12)$$

The left side of the equation (1-12) is $d_j = \dfrac{c(f_j - f_{Tj})}{f_{Tj}} + v_{xj}a_{xj} + v_{yj}a_{yj} + v_{zj}a_{zj}$.

Because the value of $\dfrac{f_j}{f_{Tj}}$ is very close to 1. Ordinarily, the difference between $\dfrac{f_j}{f_{Tj}}$ and 1 may be a few parts per million. The equation (1-12) can be simplified as following:

$$d_j = \dot{x}_u a_{xj} + \dot{y}_u a_{yj} + \dot{z}_u a_{zj} - c\dot{t}_u \qquad (1\text{-}14)$$

A set of 4-variable equations are established for the variable $\dot{u}=\dot{x}_u,\dot{y}_u,\dot{z}_u,\dot{t}_u$ as following:

$$d = Hg \qquad (1\text{-}15)$$

wherein,

$$d = \begin{bmatrix} d_1 \\ d_2 \\ ... \\ d_N \end{bmatrix}, H = \begin{bmatrix} a_{x1} & a_{y1} & a_{z1} & 1 \\ a_{x2} & a_{y2} & a_{z2} & 1 \\ .... & .... & .... & 1 \\ a_{xN} & a_{yN} & a_{zN} & 1 \end{bmatrix}, g = \begin{bmatrix} \dot{x}_u \\ \dot{y}_u \\ \dot{z}_u \\ -c\dot{t}_u \end{bmatrix}, \qquad (1\text{-}16)$$

Accordingly, the velocity and the time shift can be obtained as following by equation (1-17):

$$g = H^{-1}d \qquad (1\text{-}17)$$

wherein, $H^{-1}$ represents an inverse matrix of the matrix H.

The moving information calculation module 120 in the moving information determination apparatus 100 is configured to calculate the velocity based on the ECA information, in accordance with one embodiment of the present disclosure. In other words, an ECA velocity measurement equation is added to the equations of the conventional method.

It is assumed that the coordinate position of the satellite at the center of the Earth is (0, 0, 0), the value of the velocity is 0 and frequency $f_E$ is equal to zero. Thus, an equation (1-18) is obtained according to the equation (1-14).

$$0 = \dot{x}_u\, a_x^E + \dot{y}_u\, a_y^E + \dot{z}_u\, a_z^E \qquad (1\text{-}18)$$

In the equation (1-18), $(a_x^E, a_y^E, a_z^E)$ represents a direction of a vector unit of the moving information determination apparatus 100 to the satellite at the center of the Earth center. Thus,

$$a_x^E = \frac{0 - x_u}{\rho_E}, a_y^E = \frac{0 - y_u}{\rho_E}, a_z^E = \frac{0 - z_u}{\rho_E}$$

According to the equation (1-18) and the equations of the conventional method, a set of 4-variable equations are established for the variable $\dot{u}=\dot{x}_u,\dot{y}_u,\dot{z}_u\dot{t}_u$ as following:

$$d = Hg \qquad (1\text{-}19)$$

wherein,

$$d = \begin{bmatrix} d_1 \\ d_2 \\ ... \\ d_N \end{bmatrix}, \quad H = \begin{bmatrix} a_{x1} & a_{y1} & a_{z1} & 1 \\ a_{x2} & a_{y2} & a_{z2} & 1 \\ .... & .... & .... & 1 \\ a_{xN} & a_{yN} & a_{zN} & 1 \\ a_x^E & a_y^E & a_z^E & 0 \end{bmatrix}, \quad g = \begin{bmatrix} \dot{x}_u \\ \dot{y}_u \\ \dot{z}_u \\ -c\dot{t}_u \end{bmatrix} \quad (1\text{-}20)$$

Accordingly, the velocity and the time shift can be obtained as following by equation (1-21):

$$g = H^{-1}d \qquad\qquad (1\text{-}21)$$

wherein, $H^{-1}$ represents an inverse matrix of the matrix H.

The moving information determination apparatus 100 further includes a detection module (not shown), in accordance with one embodiment of the present disclosure. The detection module is configured to determine whether the calculated current position of the moving information determination apparatus 100 is valid based on the value of dilution of precision (DOP), the intensity of the signals from the satellites and if the velocity of the moving information determination apparatus 100 conforms to the motion module.

In one example, the moving information determination apparatus 100 further includes a selection module (not shown). The selection module is coupled to the moving information calculation module 120 in the moving information determination apparatus 100. In a situation that the value of the DOP is poor, the signals from the satellites are weak or the number of the satellites is not enough, the selection module selects the moving information determination apparatus 100 to position and measure the velocity based on the measured pseudo range and/or frequency of GPS signal from each satellite and the radius of the Earth. However, in a situation that the radius of the Earth is not available, the selection module selects the conventional GPS positioning method and/or velocity measuring method to obtain the position and/or the velocity of the GPS receiver based on the measured pseudo range and/or frequency of GPS signal from each satellite provided by the baseband signal processing unit. Furthermore, the selection module can be arranged outside the moving information determination apparatus 100. The details for the arrangement may be apparent to those skilled in the art and can be configured according to the actual requirements, and is not limited to the above descriptions.

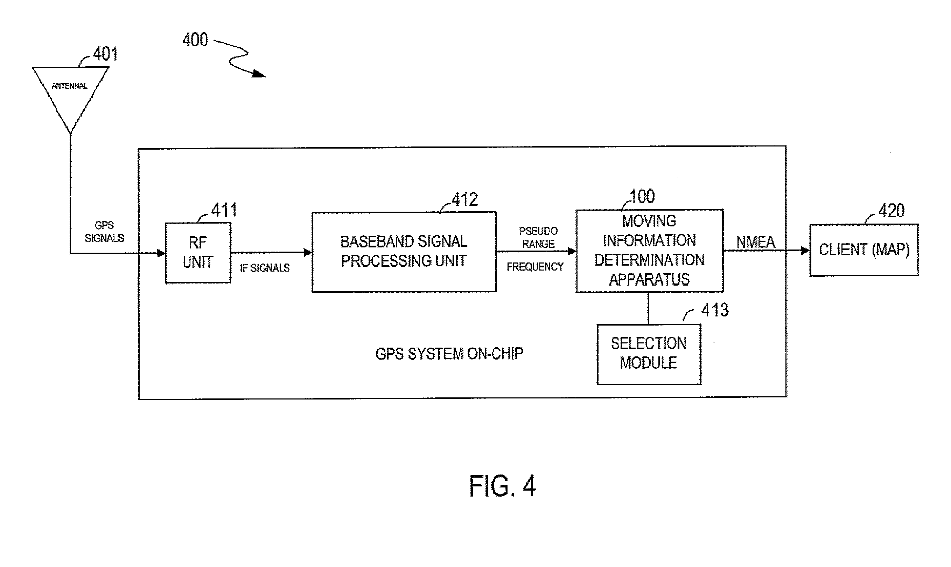

The moving information determination apparatus 100 as described can be integrated in a GPS receiver 400. As shown in FIG. 4, a RF unit 411 in the GPS receiver 400 is configured to receive GPS signals from an antenna 401, process the received signals and convert the signals to the intermediate-frequency signals. A baseband signal processing unit 412 is configured to demodulate and decode the intermediate-frequency signals to obtain the frequencies and pseudo ranges. The moving information determination apparatus 100 obtains the pseudo ranges of the satellites and frequencies of GPS signals from the satellites from the baseband signal processing unit 412, and calculates the position, the velocity and time of the GPS receiver according to the method describe above. The information (for example the position, velocity and time information of the GPS receiver etc.) is converted to the information with a standard format of National Marine Electronics Association (NMEA) code, and output by the moving information determination apparatus 100. The information is further output to the client terminal 420, such as, a map. The NMEA is one of the output protocols used by GPS system.

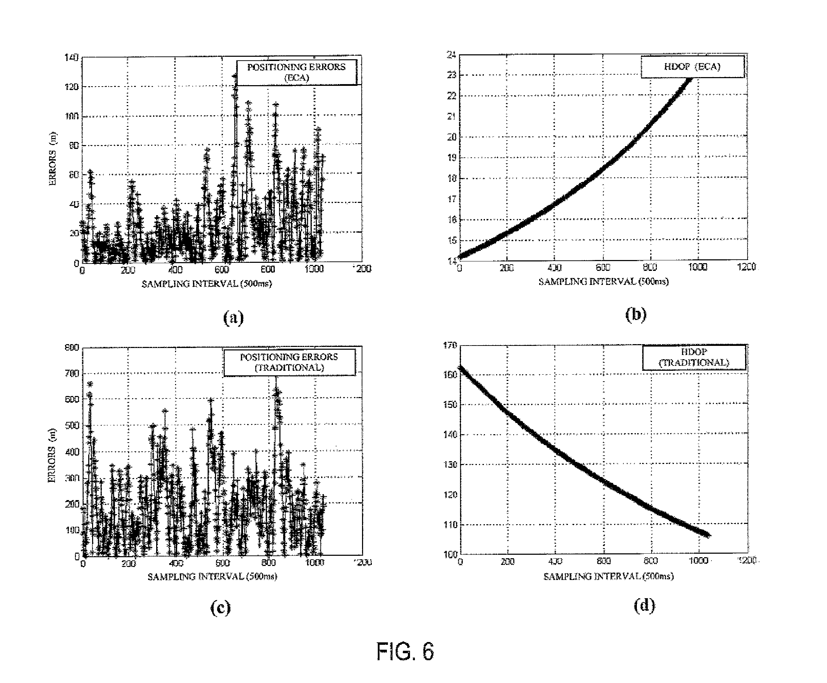

In a situation that the number of the satellites for the present invention is same as that of for the conventional receiver, a better result can be obtained by the receiver disclosed in the present disclosure than the conventional receiver. FIG. 6 shows a few charts illustrating examples of the positioning errors and DOP values obtained from a GPS receiver disclosed in the present invention and a conventional receiver, when the DOP value is relatively large. As shown in FIG. 6(a) and FIG. 6(b), the DOP value is reduced by the GPS receiver disclosed in the present disclosure, and the positioning error is reduced accordingly. As shown in FIG. 6(c) and FIG. 6(d), the jitter of the positioning error obtained by the conventional positioning method is relatively large, and the maximum deviation of the positioning error is greater than 600m. However, the value of the positioning error is less than 100m by the ECA positioning method.

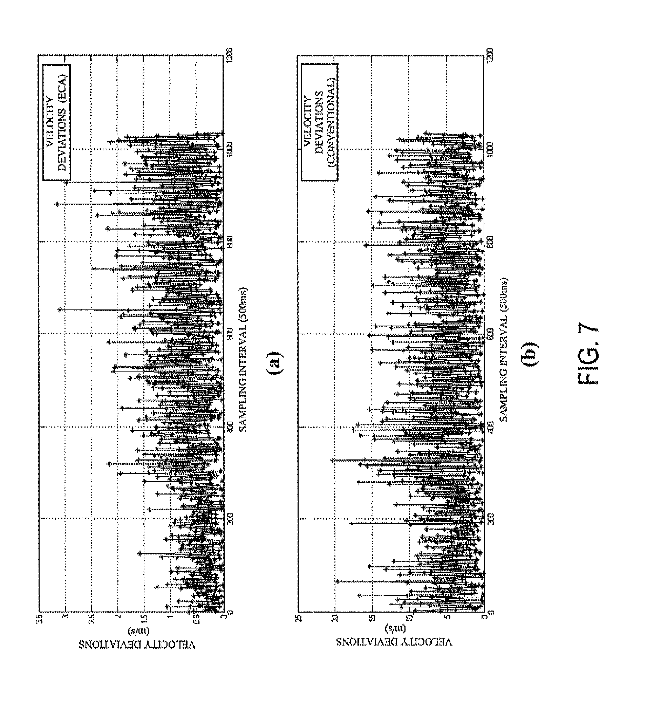

FIG. 7 is a chart illustrating an example of the velocity deviations obtained from a GPS receiver disclosed in the present invention and a conventional receiver, respectively, when the DOP value is relatively large. As shown in FIG. 7(a) and FIG. 7(b), the velocity deviation obtained from the GPS receiver disclosed in the present invention is decreased compared with the velocity deviation obtained from the conventional receiver. Therefore, a much more accurate measured velocity is obtained.

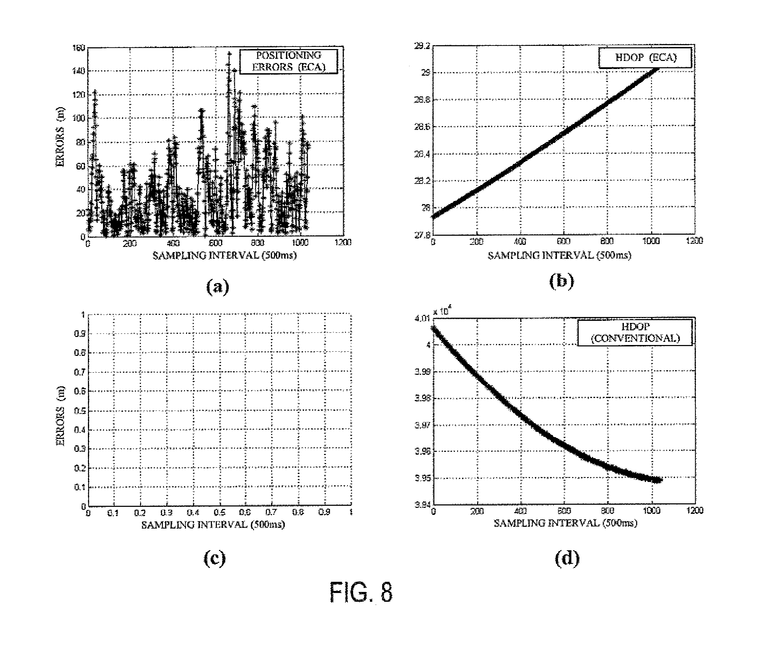

FIG. 8 is a chart illustrating an example of the positioning errors and DOP values obtained from a GPS receiver disclosed in the present invention and a conventional receiver, respectively, when the DOP value is extremely large. As shown in FIG. 8, FIG. 8(c) is blank and illustrates that the positioning method in the conventional receiver cannot converge. As shown in FIG. 8(b), the DOP value is reduced by the GPS receiver disclosed in the present disclosure, and the positioning error is reduced accordingly. And the positioning can be performed finally (as shown in FIG. 8(a)). The HDOP represents the horizontal dilution of precision.

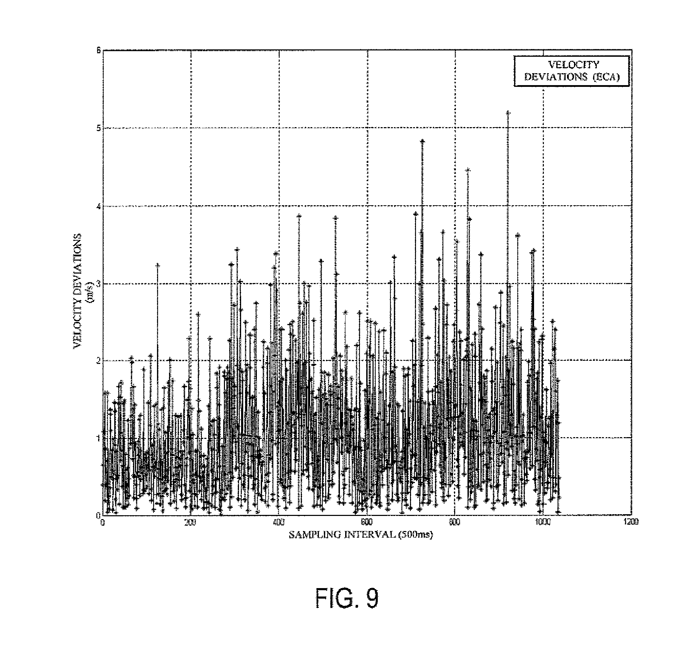

FIG. 9 is a chart illustrating an example of the velocity deviations obtained from a GPS receiver disclosed in the present invention when the DOP value is extremely large. The velocity cannot be measured by the conventional receiver in the situation that the DOP value is extremely large.

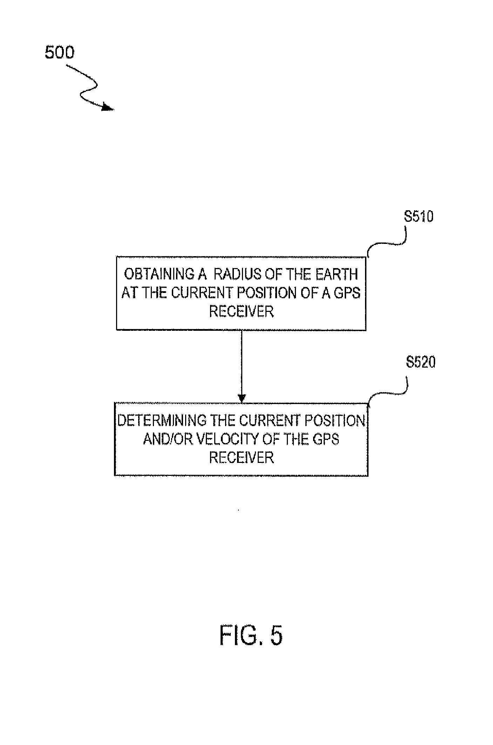

A method for calculating the moving information is provided below, in accordance with one embodiments of the present disclosure. The method is used to calculate a current position and/or velocity of the receiver. FIG. 5 is a flowchart illustrating an example of a positioning method, in accordance with one embodiment of the present disclosure. As shown in FIG. 5, FIG.5 is described with FIG.1B, in block S510, the radius of the Earth at the position of the GPS receiver is obtained. For example, an initial position of the moving information determination apparatus 100 is obtained from the initial position establishment and management module 130 and a corresponding altitude information is obtained from the altitude information source 150, then the radius of the Earth at the position of the GPS receiver is calculated based on the initial position and the corresponding altitude information. In block S520, the current position and/or velocity of the GPS receiver are determined based on the radius of the Earth and the signals from multiple satellites.

The radius of the Earth can be an average radius of the Earth or a radius of the Earth which is calculated based on an initial position and altitude information. The initial position is determined by an initial position establishment and management module, and the altitude information is obtained from one of the four kinds of altitude information sources with a priority of use. The details for calculating the radius of the Earth is described above. Therefore, a step of calculating the initial position can be performed before the obtaining the radius of the Earth. The details for obtaining the initial position are similar as the method described in FIG. 2 and will not be repetitively described herein for brevity and clarity.

The above-mentioned method can include an updating step. The updating step is used to update a previous position with a newly calculated position. For example, a first position $P_0$ is replaced by an initial position $P_{coarse}$, and the initial position $P_{coarse}$ is replaced by a more accurate position which is finally calculated.

The above-mentioned method can further include a selecting step. The selecting step is used to select an altitude information source from the four kinds of altitude information sources with a priority of use. The details for selecting the altitude information source have described above and will not be repetitively described herein for brevity and clarity.

The above-mentioned method can be utilized in the GPS system and includes a selecting step. In a situation that the DOP is poor, the satellite signal is weak or the number of the satellites is not enough, the selecting step is used for selecting the method above-mentioned for positioning. However, if the radius of the Earth is not available, the conventional GPS positioning method can be selected to calculate the position and/or velocity of the GPS receiver by using the measured pseudo range and/or frequency of GPS signal from each satellite provided by the baseband signal processing unit.

In one embodiment, the method above-mentioned can be utilized in the GPS system and can include an checking step. The checking step is used for determining the validation of the finally calculated position based on the DOP value, the intensity of the signals from satellites and if the velocity of the GPS receiver conforms to the motion module.

Comparing with the conventional method, the method disclosed in the present disclosure can perform positioning in a situation that the number of the satellites is not enough or the signals from the satellites have strong interference, and can further increase the accuracy of positioning. Furthermore, in a situation that the number of satellite is equal, a better result can be obtained.

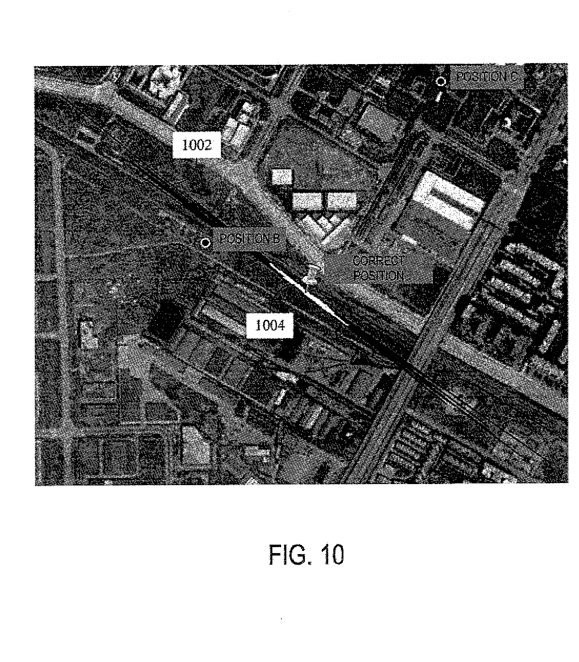

FIG. 10 is a picture illustrating positioning results calculated by a GPS receiver disclosed in the present disclosure and a conventional receiver. In the example shown in FIG. 10, four satellites are used. As shown in FIG. 10, the section 1002 colored in black represents the result calculated by the conventional method, and the section 1004 colored in white represents the result calculated by the method disclosed in the present disclosure. According to the positioning results shown in FIG. 10, the method disclosed in the present disclosure has an advantage over the conventional method in position accuracy.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

**Claims**

1. A moving information determination apparatus for determining moving information comprising :

   an altitude information and position information storage module for providing initial position information of the moving information determination apparatus and altitude information of the moving information determination apparatus;
   an Earth Center Assistant (ECA) acquisition module for obtaining a radius of Earth at a current position of the moving information determination apparatus based on the initial position information and the altitude information from the altitude information and position information storage module; and
   a moving information calculation module for calculating at least one of the current position and velocity of the moving information determination apparatus based on the radius of Earth and a plurality of signals from a plurality of satellites.

2. The moving information determination apparatus of claim 1, wherein the altitude information and position information storage module further comprising:

   an initial position establishment and management module, that obtains the initial position,
   wherein the initial position establishment and management module obtains a first position based on an average radius of the Earth and the signals from the satellite, obtains an Nth radius of the Earth that is more accurate than the average radius of the Earth based on an Nth position and a corresponding certain altitude value, obtains an (N+1)th position that is more accurate than the Nth position based on the Nth radius of the Earth and the signals from the satellites, and determines the initial position from the (N+1) positions based on a predetermined rule, and wherein N is an integer that is greater than or equal to 1.

3. The moving information determination apparatus of claim 2, wherein the certain altitude value is obtained from an altitude information source or is set as any value according to the actual landscape.

4. The moving information determination apparatus of one of claims 2 or 3, wherein the altitude information and position information storage module further comprising:

   a position information database, that stores at least one of positions from the first position to the (N+1)th position and the current position of the moving information determination apparatus.

5. The moving information determination apparatus of one of claims 2 to 4, wherein the moving information determination apparatus further comprising:

   a position information updating module, that updates the Nth position by the (N+1)th position, and updates the (N+1)th position by the current position of the moving information determination apparatus.

6. The moving information determination apparatus of one of claims 1 to 5, wherein the altitude information and position information storage module further comprises an altitude information source for storing altitude information, said altitude information source comprises:

   a first altitude information source operable for storing altitude information which is calculated by a GPS receiver;
   a second altitude information source operable for storing previous altitude information recorded on the GPS receiver;
   a third altitude information source operable for storing altitude information obtained from an external altitude measurement source; and
   a fourth altitude information source operable for storing global altitude information.

7. The moving information determination apparatus of claim 6, further comprising an altitude information source selection module operable for selecting an altitude value as a basis to calculate the radius of the Earth from the first, the second, the third and the fourth altitude information sources,
   wherein the altitude information source selection module selects the altitude information according to at least one of the methods:

(a) comparing an altitude value stored in the corresponding altitude information source with an altitude datum, and abandoning the altitude value stored in the corresponding altitude information source if a difference between the altitude value and the altitude datum is greater than a first threshold;
(b) comparing an altitude value stored in the corresponding altitude information source with a first altitude value calculated by the moving information determination apparatus based on the altitude value stored in the corresponding altitude information source, and abandoning the altitude value stored in the corresponding altitude information source if a difference between the altitude value and the first altitude value is greater than a second threshold;
(c) comparing the current position calculated by the moving information determination apparatus with a backup previous position stored in the position information database, and abandoning the altitude value stored in the corresponding altitude information source if a difference between the current position and the backup previous position is greater than a third threshold;
(d) comparing the initial position with a backup previous position in the position information database, and abandoning the altitude value stored in the corresponding altitude information source if a difference between the initial position and the backup previous position is greater than a fourth threshold;

wherein the altitude information source selection module selects one of the first, the second, the third and the fourth altitude information sources by the order of selecting the altitude information calculated by the GPS receiver and stored in the first altitude information source, the previous altitude information recorded on the GPS receiver and stored in the second altitude information source, the altitude information obtained from an external altitude measurement source and stored in the third altitude information source, and the altitude information stored in the fourth altitude information source.

8. The moving information determination apparatus of one of claims 1 to 7, wherein the moving information determination apparatus is integrated into a Global Navigation Positioning System,
wherein the moving information determination apparatus further comprises a checking module that determines the validation of the finally calculated position based on the at least one of the parameters of dilution of precision (DOP) value, the intensity of the signals from satellites and if the velocity of the GPS receiver conforms to the motion module.

9. The moving information determination apparatus of one of claims 1 to 8, wherein the moving information determination apparatus is integrated into a Global Positioning Navigation System, wherein the moving information determination apparatus further comprises a selection module that determines to select the moving information determination apparatus based on at least one of the parameters of the DOP value, the intensity of signals from the satellites, the availability of the radius of the Earth and the number of the satellites.

10. A GPS receiver in a Global Navigation Positioning System, comprising:

a moving information determination apparatus according to one of claims 1 to 9; and
a baseband signal processing unit for providing the signals from the satellites to the moving information determination apparatus.

11. A method, for determining moving information of an object equipped with a GPS receiver, comprising:

obtaining, at an altitude information and position information storage module, initial position information and altitude information of the GPS receiver;
obtaining, at an Earth center assistant information acquisition module, a radius of the Earth at a current position of the GPS receiver based on the initial position information and altitude information of the GPS receiver; and
calculating, at a moving information calculation module, the moving information based on the radius of the Earth and a plurality of signals from a plurality of satellites,
wherein the moving information comprises at least one of the current position and velocity of the receiver.

12. The method of claim 11, wherein the step of obtaining the initial position comprising:

calculating a first position of the GPS receiver based on an average radius of the Earth and the signals from the satellites;
obtaining an Nth radius of the Earth that is more accurate than the average radius of the Earth based on an Nth position and a corresponding certain altitude value;

obtaining an (N+1)th position that is more accurate than the Nth position based on the Nth radius of the Earth and the signals from the satellites; and

determining the initial position from the first position to the (N+1)th position based on a predetermined rule, wherein N is an integer that is greater than or equal to 1.

13. The method of claim 12, wherein the certain altitude value is obtained from an altitude information source or is set as any value according to the actual landscape.

14. The method of claim 12 or 13, further comprising:

updating the Nth position by the (N+1)th position; and
updating the (N+1)th position by the current position of the receiver.

15. The method of one of claims 11 to 14, further comprising:

selecting an altitude value as a basis to calculate the radius of the Earth before obtaining the radius of the Earth from an altitude information source, wherein said altitude information source comprises four kinds of altitude information sources,

wherein the four kinds of altitude information source comprises:

a first altitude information source operable for storing altitude information which is calculated by a GPS receiver;

a second altitude information source operable for storing previous altitude information recorded on the GPS receiver;

a third altitude information source operable for storing altitude information obtained from an external altitude measurement source; and

a fourth altitude information source operable for storing global altitude information.

16. The method of claim 15, wherein the step of selecting the altitude value is performed according to at least one of the methods:

(a) comparing an altitude value stored in the corresponding altitude information source with an altitude datum, and abandoning the altitude value in the corresponding altitude information source if a difference between the altitude value and the altitude datum is greater than a first threshold;

(b) comparing an altitude value stored in the corresponding altitude information source with a first altitude value calculated by the moving information determination apparatus based on the altitude value stored in the corresponding altitude information source, and abandoning the altitude value stored in the corresponding altitude information source if a difference between the altitude value and the first altitude value is greater than a second threshold;

(c) comparing the current position of the GPS receiver calculated by the moving information determination apparatus with a backup previous position stored in a position information database, and abandoning the altitude value in the corresponding altitude information source if a difference between the current position and the backup previous position is greater than a third threshold;

(d) comparing the initial position with a backup previous position in the position information database, and abandoning the altitude value in the corresponding altitude information source if a difference between the initial position and the backup previous position is greater than a fourth threshold; wherein the altitude value is selected by the order of selecting the altitude information calculated by the GPS receiver and stored in the first altitude information source, the previous altitude information recorded on the GPS receiver and stored in the second altitude information source, the altitude information obtained from an external altitude measurement source and stored in the third altitude information source, and the altitude information stored in the first altitude information source.

17. The method of one of claims 11 to 16, wherein the method is used in a Global Positioning Navigation System, and wherein the method further comprising:

determining the validation of a finally calculated position based on the at least one of the parameters of the DOP value, the intensity of the signals from satellites and if the velocity of the GPS receiver conforms to the motion module.

18. The method of one of claims 11 to 17, wherein the method is used in a Global Positioning Navigation System, and wherein the method further comprising:

determining to select the method for determining moving information based on at least one of the parameters of the DOP value, the intensity of signals from the satellites, the availability of the radius of the Earth, and the number of the satellites.

100

110

111

ECA INFORMATION
ACQUISITION MODULE

ALTITUDE
INFORMATION
AND POSITION
INFORMATION
STORAGE
MODULE

PSEUDO RANGE OF
THE SATELLITE

FREQUENCY OF
THE SATELLITE

MOVING INFORMATION
CALCULATION MODULE

120

CURRENT POSITION AND/ OR
VELOCITY

# FIG. 1A

100

111

ECA INFORMATION
ACQUISITION MODULE

110

INITIAL POSITION
ESTABLISHMENT AND
MANAGEMENT MODULE

130

PSEUDO RANGE OF
THE SATELLITE

FREQUENCY
OF THE SATELLITE

MOVING INFORMATION
CALCULATION MODULE

120

ALTITUDE
INFORMATION
SOURCE

150

POSITION
INFORMATION
DATABASE

140

CURRENT POSITION AND/ OR
VELOCITY

# FIG. 1B

200

S210

OBTAINING AN AVERAGE RADIUS OF THE
EARTH AND INFORMATION FROM THE
SATELLITES

S220

OBTAINING A FIRST POSITION $P_0$

S230

AMENDING THE ALTITUDE VALUE
CORRESPONDING TO THE FIRST POSITION AS
ZERO

S240

OBTAINING A MORE ACCURATE INITIAL RADIUS
OF THE EARTH BASED ON THE FIRST POSITION
AND THE AMENDED ALTITUDE VALUE

S250

OBTAINING THE INITIAL POSITION $P_{coarse}$ AT THE
CURRENT POSITION BASED ON THE INITIAL
RADIUS OF THE EARTH BY AN ECA
POSITIONING METHOD

FIG. 2

FIG. 3A PRIOR ART

SATELLITE j $(x_j, y_j, z_j)$

$S$

$(z_j - z_u)$

$R_j$

$(y_j - y_u)$

RECEIVER
$(x_u, y_u, z_u)$

$(x_j - x_u)$

Z

Y   X

FIG. 3B

FIG. 3C

FIG. 4

EP 2 574 962 A2

500

S510

OBTAINING A RADIUS OF THE EARTH
AT THE CURRENT POSITION OF A GPS
RECEIVER

S520

DETERMINING THE CURRENT POSITION
AND/OR VELOCITY OF THE GPS
RECEIVER

FIG. 5

FIG. 6

(a)

(b)

FIG. 7

(a)

(b)

(c)

(d)

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110306929